# EUROPEAN PATENT SPECIFICATION

(11) **EP 3 467 326 B1**
(45) Date of publication and mention of the grant of the patent: **17.06.2020**
(21) Application number: 17805595.0
(22) Date of filing: 02.05.2017
(51) Int. Cl.: F16C 19/10, F16C 17/04, F24F 13/22, F16C 19/30

(54) **BEARING AND AIR CONDITIONER**
LAGER UND KLIMAANLAGE
PALIER ET CONDITIONNEUR D'AIR

(30) Priority: 03.06.2016 CN 201610393494; 03.06.2016 CN 201610393480
(43) Date of publication of application: 10.04.2019
(73) Proprietor: Gree Electric Appliances, Inc. of Zhuhai, Zhuhai, Guangdong 519070 (CN)
(72) Inventor: HU, Lingchao, Zhuhai Guangdong 519070 (CN); ZHU, Rirong, Zhuhai Guangdong 519070 (CN); CHEN, Zhuxiu, Zhuhai Guangdong 519070 (CN); CHEN, Cheng, Zhuhai Guangdong 519070 (CN); ZHANG, Hui, Zhuhai Guangdong 519070 (CN); LIANG, Bo, Zhuhai Guangdong 519070 (CN); YE, Wuzhan, Zhuhai Guangdong 519070 (CN); XIAO, Linhui, Zhuhai Guangdong 519070 (CN); LIN, Jinhuang, Zhuhai Guangdong 519070 (CN); ZHAO, Yubin, Zhuhai Guangdong 519070 (CN)
(74) Representative: Inchingalo, Simona
(86) International application number: PCT/CN2017/082723
(87) International publication number: WO 2017/206650

(56) References cited:
- WO-A2-2004/094853
- CN-A- 102 444 662
- CN-A- 104 603 459
- CN-A- 105 371 373
- CN-A- 105 371 373
- CN-A- 105 909 674
- CN-A- 105 910 256
- CN-U- 203 776 367
- CN-U- 205 744 888
- US-A- 3 455 618
- US-B1- 6 857 787
- US-B2- 7 217 098

## Description

### TECHNICAL FIELD

The invention relates to the field of refrigeration, and more particularly, to a bearing and an air conditioner.

### BACKGROUND

Under normal circumstances, the structure of a plastic bearing generally follows the traditional structure of bearing. The structure of a plastic bearing includes an inner ring, an outer ring, balls, a retainer and an oil seal ring. The form of the plastic bearing is relatively fixed and simple, and the plastic bearing is mainly applied in a joint which bears small forces and is free to rotate, but cannot be applied in a rotating connection with special sealing requirements. Especially in a situation that the range of rotation angle is required to be fixed, there is much limitation to the application of the existing plastic bearings.

Other bearings are known from US 3,455,618; US 6,857,787 B1; WO 2004/094853 A2.

US 3,455,618 A and WO 2004/094853 A2 disclose bearings according to the preamble of claim 1.

In view of this, the objective of the present invention is to provide a bearing and an air conditioner. The present invention achieves the functions of a common bearing and has lower costs, thereby achieving the purpose of reducing the production costs and improving the effect of anti-air leakage of the bearing. The bearing has a wide range of applications. The bearing is applied in the air conditioner to realize the rotation of the head assembly of the air conditioner, thereby achieving the purpose of enabling the air conditioner to sweep to the left and to the right, and further reducing air leakage from the sidewall of the bearing.

A bearing comprises:
a base ring, an inner wall of which extends in an axial direction to form a shielding ring;
an upper rotating frame, which is annular and sleeved on the shielding ring;
a lower rotating frame, which is annular, sleeved on the shielding ring, and arranged below the upper rotating frame; and
a moving assembly, which is arranged between the upper rotating frame and the lower rotating frame.

According to the invention, the bearing further comprises a supporting frame, wherein the supporting frame is annular; and an inner wall of the supporting frame extends in an axial direction to form a shielding edge; the base ring is sleeved on the shielding edge, the supporting frame is provided with a first annular groove, and the first annular groove is provided with a first drainage hole.

In one of the embodiments of the bearing, the base ring is coupled to the supporting frame by a buckle.

In one of the embodiments of the bearing, the supporting frame is provided with a position limiting column.

In one of the embodiments of the bearing, an angle between an inner bottom surface of the first annular groove and a horizontal plane is from 2° to 5°.

In one of the embodiments of the bearing, the lower rotating frame is provided with a second annular groove; and the second annular groove is provided with a second drainage hole.

In one of the embodiments of the bearing, the base ring is provided with a third annular groove; and the third annular groove is provided with a third drainage hole.

In one of the embodiments of the bearing, the base ring is provided with a third annular groove; the third annular groove is provided with a third drainage hole; and the supporting frame is provided with a rotation stopping structure, which is configured to match with the third drainage hole to limit a rotation angle of the base ring.

In one of the embodiments of the bearing, there are two rotation stopping structures, which are spaced and arranged on the supporting frame.

In one of the embodiments of the bearing, a crossed-ribs grid structure is provided on the supporting frame, and disposed within an arcuate range between the two rotation stopping structures.

In one of the embodiments of the bearing, taking a center point of the rotating of the supporting frame as a circle center, a center angle α between two rotation stopping structures is from 100° to 120°.

In one of the embodiments of the bearing, the upper rotating frame is provided with a latch structure, which is configured to limit a position of a head rotating drum mounted on the upper rotating frame.

In one of the embodiments of the bearing, the upper rotating frame is further provided with a fixing column, which is configured to fix edges and corners of heat insulating material, and to prevent the heat insulating material from cocking.

In one of the embodiments of the bearing, the moving assembly is a rolling assembly or a sliding assembly.

In one of the embodiments of the bearing, the rolling assembly includes a retainer and a ball arranged in a clamping hole of the retainer.

In one of the embodiments of the bearing, the upper rotating frame and the lower rotating frame are respectively provided with a rolling groove matching with the ball.

In one of the embodiments of the bearing, the upper rotating frame is coupled to the base ring by a buckle.

In one of the embodiments of the bearing, the bearing is made of plastic material.

In one of the embodiments of the bearing, an annular cavity, which has an opening at one end thereof, is formed between the base ring, the lower rotating frame and the supporting frame; and the opening of the annular cavity is disposed between the shielding edge and the shielding ring.

In one of the embodiments of the bearing, a connection between the shielding edge and a main body of the supporting frame is a curved transition.

In one of the embodiments of the bearing, a height of the shielding ring is greater than a height of the shielding edge.

The present invention further relates to an air conditioner comprising a head assembly and an air duct component; the head assembly includes a head rotating drum, which is provided with an air outlet; the head rotating drum is connected to the air duct component through the bearing defined in any one of the embodiments above; and the head rotating drum is fixed on the upper rotating frame.

The beneficial effects of the invention are:
In the bearing and the air conditioner of the present invention, the inner wall of the base ring extends in the axial direction to form a shielding ring, and the upper rotating frame and the lower rotating frame are both sleeved on the shielding ring. The present invention achieves the functions of a common bearing and has lower costs, thereby achieving the purpose of reducing the production costs and improving the anti-air leakage effects of the bearing. The bearing has a wide range of application. The bearing is applied in the air conditioner to realize the rotation of the head assembly of the air conditioner, thereby achieving the purpose of enabling the air conditioner to sweep to the left and to the right, further reducing the air leakage from the sidewall of the bearing, and having better anti-air leakage effects.

### BRIEF DESCRIPTION OF DRAWINGS

To make the content of the present invention more clearly and be understood more easily, the present invention will be further described in more details with reference to the accompanying figures and embodiments, wherein,
Fig. 1 is an exploded schematic diagram of a bearing according to one embodiment of the present invention;
Fig. 2 is a partial cross-sectional schematic view of the bearing shown in Fig. 1;
Fig. 3 is a top schematic view of the bearing shown in Fig. 2;
Fig. 4 is a schematic view of the portion A in Fig. 2;
Fig. 5 is a partial enlarged schematic view of the portion B in Fig. 2;
Fig. 6 is a top schematic view of the supporting frame in Fig. 1;
Fig. 7 is a bottom schematic view of the bearing according to another embodiment of the present invention;
Fig. 8 is a front partial cross-sectional schematic view of the bearing in Fig. 7;
Fig. 9 is a front schematic view of the lower rotating frame in Fig. 8;
Fig. 10 is a top schematic view of the lower rotating frame in Fig. 9;
Fig. 11 is a top schematic view of the supporting frame in Fig. 8;
Fig. 12 is a front schematic view of the base ring in Fig. 8;
Fig. 13 is a top schematic view of the base ring in Fig. 12;
Fig. 14 is a front schematic view of the upper rotating frame in Fig. 8;
Fig. 15 is a top schematic view of the upper rotating frame in Fig. 14;
Fig. 16 is an assembly schematic view illustrating the bearing mounted on an air conditioner according to one embodiment of the present invention;
   wherein:
   100 bearing; 101 base ring; 1011 shielding ring; 1012 third annular groove;
   1013 third drainage hole; 102 upper rotating frame; 1021 latch structure; 1022 fixing column;
   103 lower rotating frame; 1031 second annular groove; 1032 second drainage hole; 104 supporting frame;
   1041 shielding edge; 1042 first annular groove; 1043 first drainage hole; 1044 position limiting column;
   1045 rotation limiting structure; 1046 crossed-ribs grid structure; 1047 screw column; 105 retainer;
   106 annular cavity;
   201 head rotating drum; 202 bracket; 203 air guiding bracket; 204 air outlet;
   205 air deflector; 206 upper cover; 207 rolling bearing; 208 gear disk; 209 driving motor.

### DETAILED DESCRIPTION OF THE PREFERRED EMBODIMENTS

In order to make the objectives, technical schemes and advantages of the present invention clearer and more comprehensible, the bearing and the air conditioner of the present invention will be further described in details with reference to the accompanying drawings and embodiments. It should be understood that the specific embodiments described herein are merely explanations of the present invention but not intended to limit the invention.

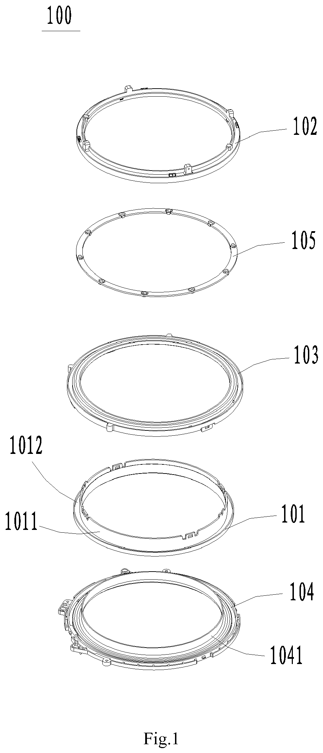

As shown in figures 1 to 4, a bearing 100 according to the first embodiment of the present invention may be applied in an air conditioner, and the bearing 100 is configured to connect a circular head assembly of the air conditioner with a main body of the air conditioner. The bearing 100 includes a base ring 101, an upper rotating frame 102, and a lower rotating frame 103 and a moving assembly. The upper rotating frame 102, the moving assembly, the lower rotating frame 103 and the base ring 101 are arranged in order from the top to the bottom.

The inner wall of the base ring 101 extends in the axial direction to form a shielding ring 1011. The upper rotating frame 102 is annular and sleeved on the shielding ring 1011. The lower rotating frame 103 is also annular and also sleeved on the shielding ring 1011. The lower rotating frame 103 is arranged below the upper rotating frame 102. The moving assembly is arranged between the upper rotating frame 102 and the lower rotating frame 103. The moving assembly is a rolling assembly or a sliding assembly. In this embodiment, the moving assembly is a rolling assembly including a retainer 105 and balls arranged in the clamping holes of the retainer 105. The upper rotating frame 102 and the lower rotating frame 103 are respectively provided with rolling grooves matching with the balls. The longitudinal section of the main body of the retainer 105 is in a " - " shape or in a "T" shape. The bearing 100 is made of plastic material, that is to say, the bearing 100 is a plastic bearing.

The bearing 100 of this embodiment has a simple structure, achieves the functions of a common bearing and has lower costs, thereby achieving the purpose of reducing the production costs and improving the anti-air leakage effect of the bearing. The bearing is applied in the air conditioner, thereby achieving the purpose of enabling the air conditioner to sweep to the left and to the right, and further reducing the air leakage from the sidewall of the bearing.

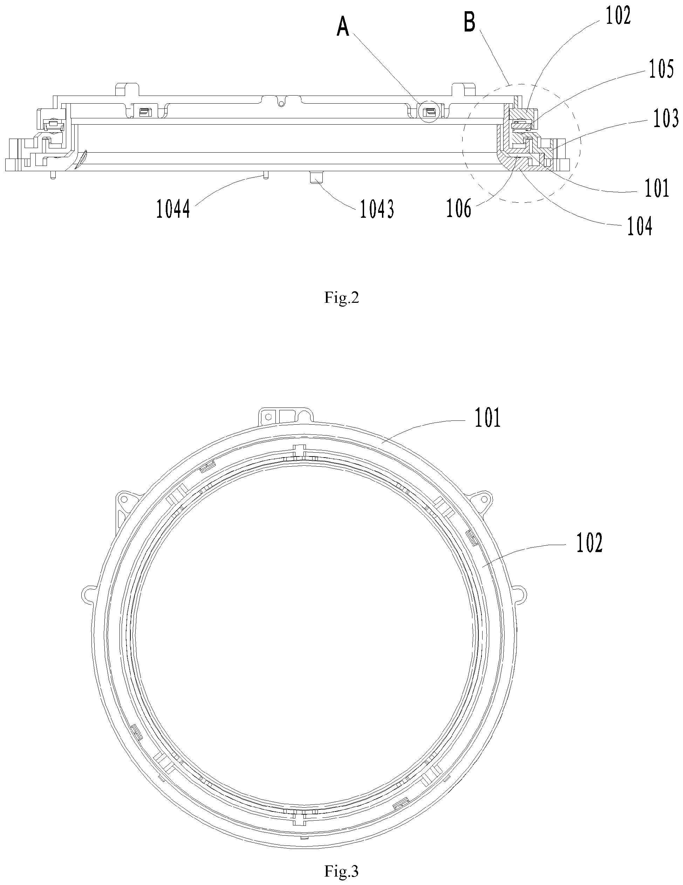

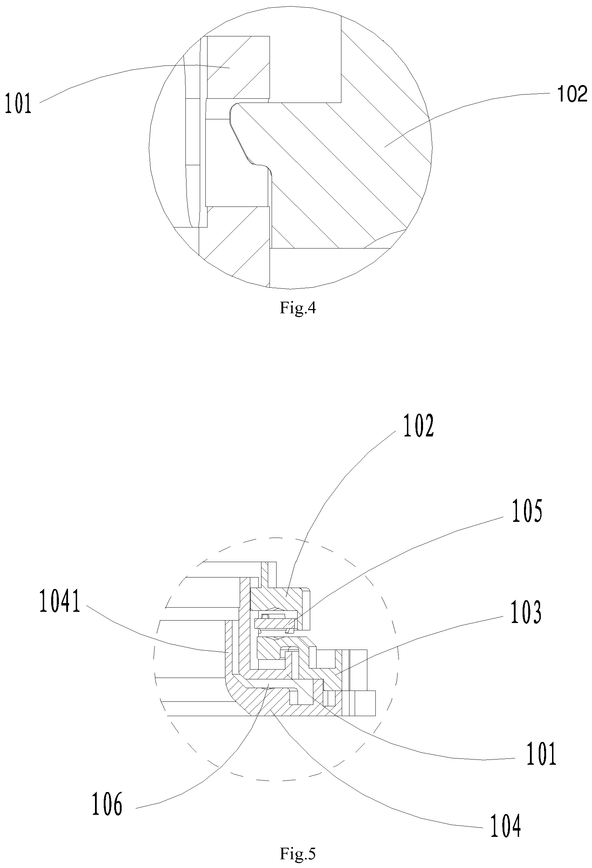

As shown in Fig. 2 and Fig. 5, as a preferred embodiment, the bearing 100 further includes a supporting frame 104. The supporting frame 104 is annular. The inner wall of the supporting frame 104 extends in an axial direction to form a shielding edge 1041. The base ring 101 is sleeved on the shielding edge 1041. An annular cavity 106 is formed between the base ring 101, the lower rotating frame 103 and the supporting frame 104, and an opening of the annular cavity 106 is disposed between the shielding edge 1041 and the shielding ring 1011.

The annular cavity 106 is configured to have better functions of draining condensed water, thereby preventing water from flowing directly into the air duct along the inner side. The wind entering the annular cavity 106 cannot leak from the side wall of the bearing 100, thus the annular cavity has a better windscreen effect. The bearing 100 is applied in the air conditioner to realize the rotation of the head assembly of the air conditioner, thereby achieving the purpose of enabling the air conditioner to sweep to the left and to the right. The bearing has better functions of draining condensed water, thereby preventing water from flowing directly into the air duct along the inner side, and eliminating the hidden dangers of water leakage and air leakage at the joint between the moving assembly of the head assembly and the air duct component.

Preferably, the connection between the shielding edge 1041 and the main body of the supporting frame 104 is a curved transition, and the structure of curved transition can achieve a better air volume requirement of a system. The height of the shielding ring 1011 is greater than the height of the shielding edge 1041. The straight wall of the base ring 101, which is disposed at the curved transition, and the corresponding structure have a better windscreen effect, thereby preventing air leaking from the side of the air outlet.

The shielding edge 1041 is configured to further improve the anti-air leakage effect of the bearing 100. The bearing 100 also has a load-bearing function of bearing the weight of the circular head assembly of the air conditioner. Preferably, the supporting frame 104 is provided with a position limiting column 1044 configured to limit the position of the supporting frame 104. Two or more position limiting columns 1044 are provided at the bottom of the supporting frame 104 at intervals.

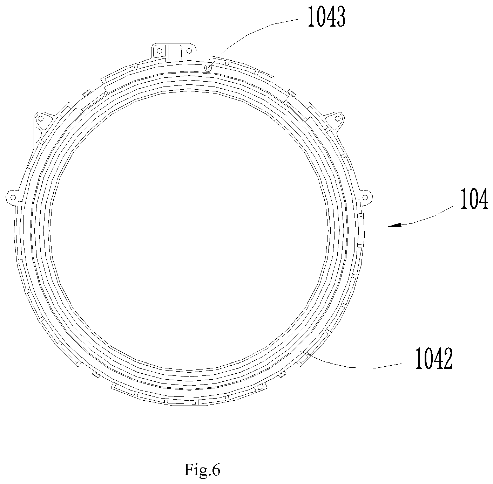

According to the invention, as shown in Fig. 6, the supporting frame 104 is provided with a first annular groove 1042, which is provided with a first drainage hole 1043. The first annular groove 1042 is configured to receive condensed water and also improve the sealing effect of the bearing. The angle between the inner bottom surface of the first annular groove 1042 and the horizontal plane is from 2° to 5°. Preferably, the angle between the inner bottom surface of the first annular groove 1042 and the horizontal plane is 3°, which is more beneficial for the water collected in the first annular groove 1042 to be discharged to the lower water receiving tray of the evaporator through the first drainage hole 1043. The high wall of the base ring 101 achieves beneficial effect of draining water and better windscreen effect, thereby preventing water from flowing directly into the air duct along the inner side, effectively preventing the cold air entering the bearing and being lost, and achieving the purpose of preventing air leakage.

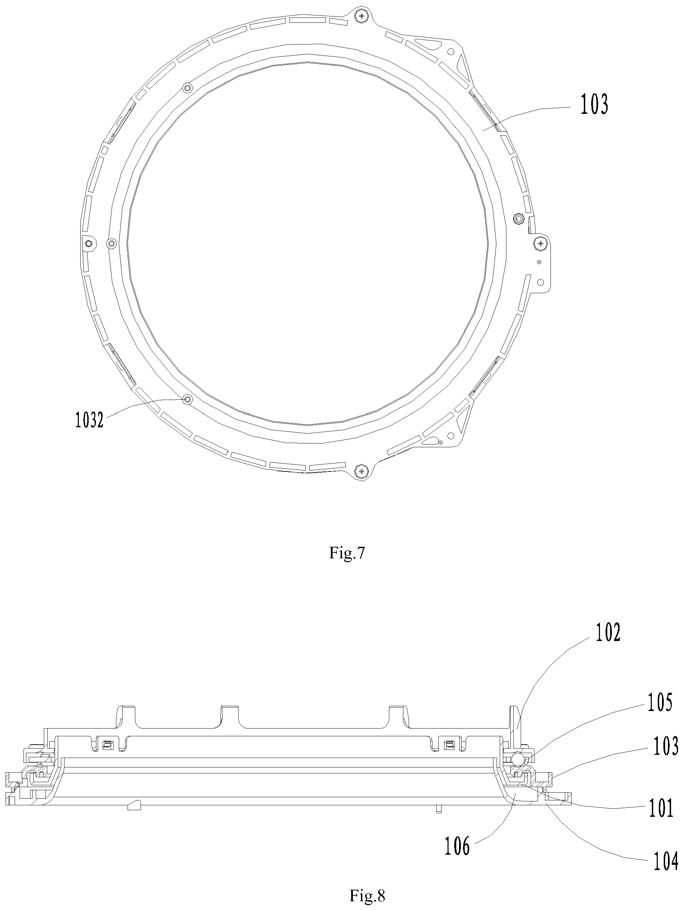

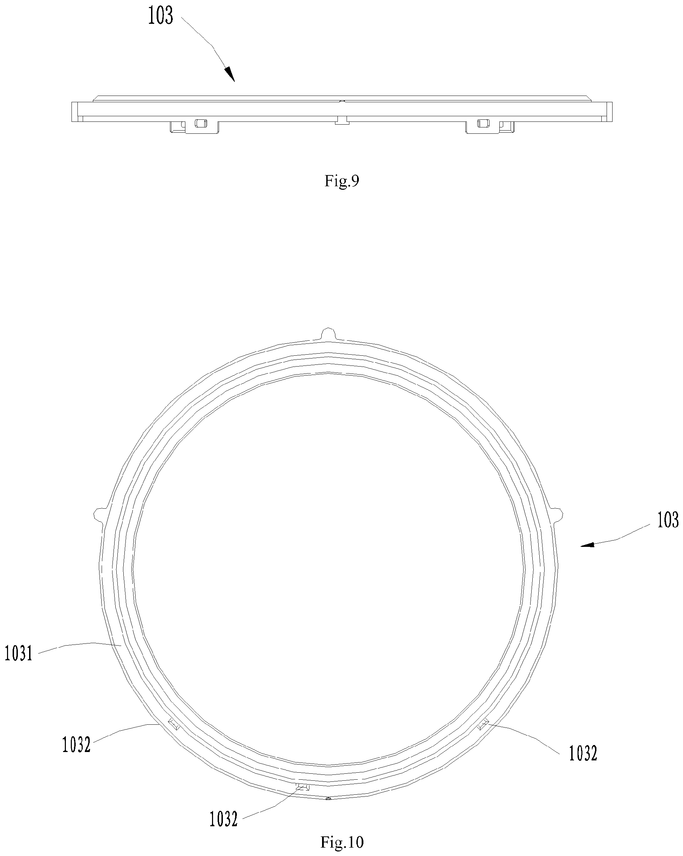

Further, as shown in figures 7 to 10, the lower rotating frame 103 is provided with a second annular groove 1031, which is provided with a second drainage hole 1032. The liquid flowing through the second drainage hole 1032 flows into the first annular groove 1042. The second annular groove 1031 is configured to receive condensed water, and the condensed water received by the second annular groove 1031 flows into the first annular groove 1042 through the second drainage hole. The first annular groove 1042 and the second annular groove 1031 further improve the sealing effect of the bearing and effectively drain the condensed water.

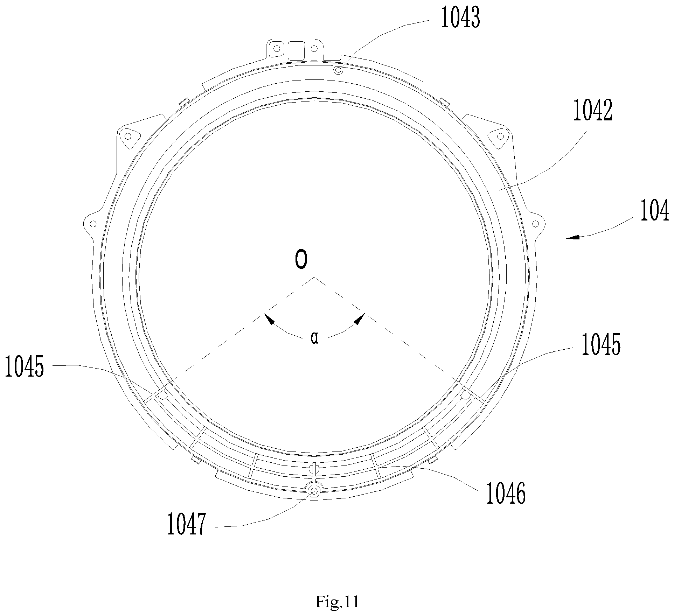

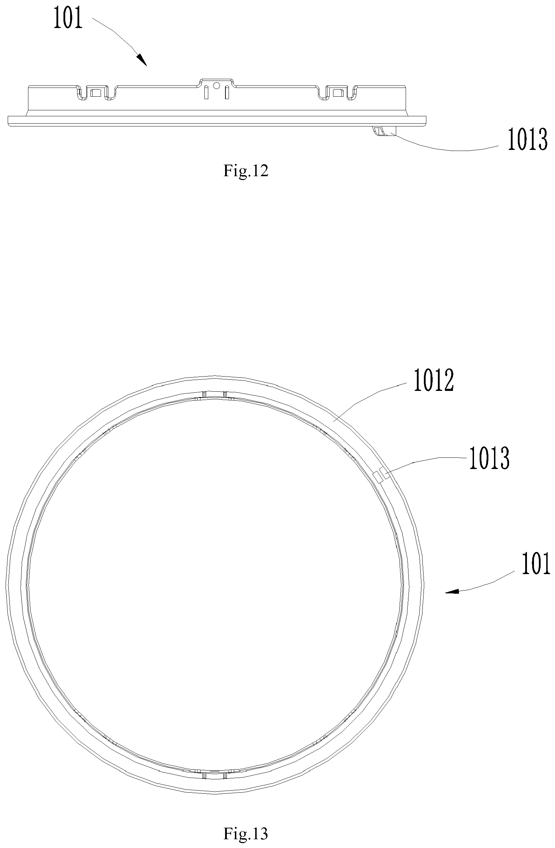

As a preferred embodiment, as shown in figures 11 to 13, the base ring 101 is provided with a third annular groove 1012, which is provided with a third drainage hole 1013. Wherein, the third drainage hole 1013 protrudes from the outer side of the bottom surface of the third annular groove 1012. The supporting frame 104 is provided with a rotation stopping structure 1045, which is configured to match with the third drainage hole 1013 to limit the rotation angle of the base ring 101.

As shown in Fig. 11, there are two rotation stopping structures 1045 spaced and arranged on the supporting frame 104. A crossed-ribs grid structure 1046 is provided on the supporting frame 104 and disposed within an arcuate range between two rotation stopping structures 1045. The crossed-ribs grid structure can effectively avoid assembly errors of the base ring 101, thereby achieving a fool-proof effect. Taking the center point O of the supporting frame 104 as a circle center, the center angle α between two rotation stopping structures 1045 is from 100° to 120°. Preferably, the central angle α is 108°. The screw column 1047 in Fig. 11 is configured to fix the head rotating drum.

As a preferred embodiment, as shown in figures 2 and 4, the base ring 101 is coupled to the upper rotating frame 102 by a buckle, which enables the lower rotating frame 103, the retainer 105 and the balls to be sandwiched between the upper rotating frame 102 and the base ring 101, thereby achieving a detachable connection between the base ring 101 and the upper rotating frame 102 and facilitating installment and detachment. In other embodiments, the upper rotating frame 102 may be coupled to the base ring 101 by a buckle, thereby achieving a detachable connection between the upper rotating frame 102 and the base ring 101, and also preventing the upper rotating frame 102 disengaging from the base ring 101. The upper rotating frame 102 may also be coupled to the lower rotating frame 103 by a buckle.

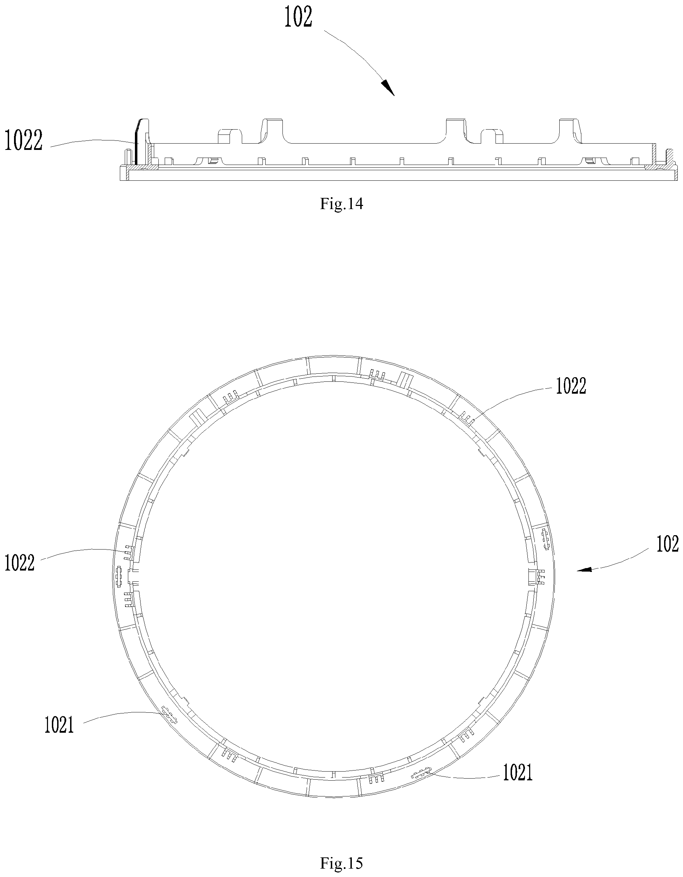

As shown in figures 14 and 15, the upper rotating frame 102 is provided with a latch structure 1021, which is configured to limit the position of the head rotating drum 201 mounted on the upper rotating frame 102. The upper rotating frame 102 is further provided with a fixing column 1022, which is configured to fix the edges and corners of the heat insulating material, thereby preventing the heat insulating material from cocking. The insulating material may be insulating foam, and the insulating foam is arranged in the head rotating drum. As shown in Fig. 15, the upper rotating frame 102 is provided with nine fixing columns 1022 and four latch structures 1021. The four latch structures 1021 are configured to limit the position of the head rotating drum, and the nine fixing columns 1022 are configured to fix the edges and corners of three pieces of insulating foam arranged inside the head rotating drum, thereby preventing the insulating foam from cocking.

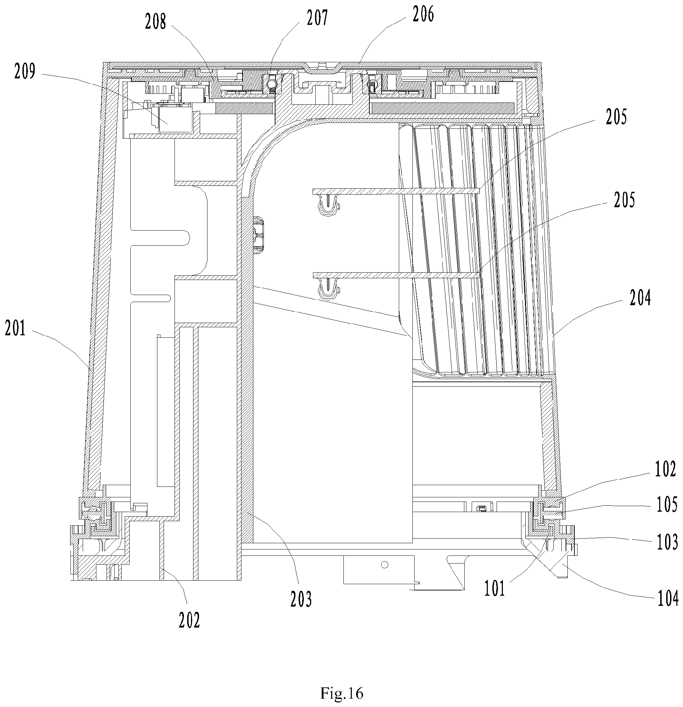

The present invention further provides an air conditioner. As shown in Fig. 16, the air conditioner includes a head assembly and an air duct component. The head assembly includes a head rotating drum 201 with an air outlet 204. The head rotating drum 201 is connected to the air duct component through the bearing 100 described in any one of the above technical schemes. In this embodiment, the head rotating drum 201 is fixed on the upper rotating frame 102, and an upper cover 206 is provided on the head rotating drum 201. The supporting frame 104 is embedded in the air duct component of the air conditioner and fixed by screws. An air guiding bracket 203 and an air deflector 205 are arranged in the air passage of the head assembly.

The gear disk 208 is connected with the bracket 202 through a rolling bearing 207. The gear disk 208 is connected with the head rotating drum 201. The driving motor 209 is arranged on the bracket 202 and is connected to the gear disk 208. When the driving motor 209 rotates, it drives the gear disk 208 to rotate, then the gear disk 208 drives the head rotating drum 201 to rotate, and the head rotating drum 201 drives the upper rotating frame 102 to rotate. The left-right rotating angle of the upper rotating frame 102 is limited by the groove disposed on the head rotating drum 201, thereby achieving the left-right rotation of the head rotating drum 201 within a certain range of angle, and achieving the purpose of enabling the air conditioner to sweep to the left and to the right. The present invention has better anti-air leakage effects and better functions of draining condensed water, and the assembly of all components of the bearing has better anti-air leakage function and anti-oil leakage function. Except the structure above, other structures in the air conditioner are all prior art, which will not be further described herein repeatedly.

The first annular groove 1042 and the shielding edge 1041 of the supporting frame 104 are capable of preventing air leakage and draining condensed water. Flowing through the air guiding sleeve and the air deflector 205, the air-conditioning cold air is blown out from the air outlet grid of the air outlet drum of the head assembly, and directly contacts with the external hot air, generating condensed water (condensation) at the junction (i.e., the air outlet grid) of the cold air and the hot air. The condensed water flows downwards along the side wall of the head rotating drum 201, and flows outwards to the second annular groove 1031 of the lower rotating frame 103. Since the condensed water is gathered at the air outlet grid, three second annular grooves 1031 are provided in the second annular groove 1031 and are evenly distributed right opposed to the air outlet grid (i.e., evenly distributed in the arc range where the air outlet grid is located), thereby enabling the water to flow into the first annular groove 1042 of the supporting frame 104. The condensed water flows downwards along the side wall of the head rotating drum 201, and flows inwards to the third annular groove 1012 of the base ring 101. Two third drainage holes 1013 of the third annular groove 1012, which match with the rotation limiting structure 1045, enable the water to flow into the first annular groove 1042 of the supporting frame 104. The head rotating drum 201 is connected together with and rotates together with the upper rotating frame 102 and the base ring 101. A rotation limiting structure 1045 is provided on the base ring 101, to avoid 360° continuous rotation of the head assembly, which easily confuses the power-on state with the power-off state, and to facilitate the foolproof assembly of the head rotating drum. A crossed-ribs grid structure 1046 is provided in a corresponding sector range on the supporting frame 104, to prevent the head rotating drum 201 and the base ring 101 from rotating randomly. The crossed-ribs grid structure is configured to avoid assembly errors of the base ring 101, thereby achieving the purpose of fool-proof assembly.

In the bearing 100 and the air conditioner of the above embodiments, the inner wall of the base ring 101 extends in the axial direction to form a shielding ring 1011, and the upper rotating frame 102 and the lower rotating frame 103 are sleeved on the shielding ring 1011. The present invention realizes the rotation of the head assembly of the air conditioner, thereby achieving the purpose of enabling the air conditioner to sweep to the left and to the right, and achieving better anti-air leakage effect. The present invention is especially applicable in the situation that the range of the rotation angle is required to be fixed. The structure design of the bearing 100 is adapted to the requirements of the rotation of the head assembly of the air conditioner, the drainage of the condensed water, and the prevention of air leakage, and the appearance of the conditioner is also harmonious and beautiful.

The inner wall of the supporting frame 104 extends in the axial direction to form a shielding edge 1041. The base ring 101 is sleeved on the shielding edge 1041. The annular cavity 106, which has an opening at one end thereof, is formed between the lower rotating frame 103, the base ring 101, and the supporting frame 104. The annular cavity 106 has better functions of draining condensed water, thereby preventing water from flowing directly into the air duct along the inner side. The wind entering the annular cavity 106 cannot leak from the side wall of the bearing 100, and the annular cavity 106 also has better windscreen effect. The bearing 100 is applied in the air conditioner, to realize the rotation of the head assembly of the air conditioner, thereby achieving the purpose of enabling the air conditioner to sweep to the left and to the right, and eliminating the hidden dangers of water leakage and air leakage at the joint between the moving assembly of the head assembly and the air duct component.

The above mentioned are only preferred embodiments of the present invention, which are described specifically and in details, but not intended to limit the scope of the present invention. It should be noted that a number of variations and modifications may be made by those skilled in the art without departing from the scope of the invention. Therefore, the scope of the invention should be determined by the appended claims.

## Claims

1. A bearing comprising:
a base ring (101), an inner wall of which extends in an axial direction to form a shielding ring (1011);
an upper rotating frame (102), which is annular and sleeved on the shielding ring (1011);
a lower rotating frame (103), which is annular, sleeved on the shielding ring (1011), and arranged below the upper rotating frame (102);
a moving assembly, which is arranged between the upper rotating frame (102) and the lower rotating frame (103); and
a supporting frame (104);
wherein, the supporting frame (104) is annular; and an inner wall of the supporting frame (104) extends in an axial direction to form a shielding edge (1041); the base ring (101) is sleeved on the shielding edge (1041); **characterized in that** the supporting frame (104) is provided with a first annular groove (1042), and the first annular groove (1042) is provided with a first drainage hole (1043).

2. The bearing according to claim 1, **characterized in that**, an angle between an inner bottom surface of the first annular groove (1042) and a horizontal plane is from 2° to 5°.

3. The bearing according to claim 1 or 2, **characterized in that**, the lower rotating frame (103) is provided with a second annular groove (1031); and the second annular groove (1031) is provided with a second drainage hole (1032).

4. The bearing according to claim 1 or 2, **characterized in that**, the base ring (101) is provided with a third annular groove (1012); and the third annular groove (1012) is provided with a third drainage hole (1013).

5. The bearing according to claim 1 or 2, **characterized in that**, the base ring (101) is provided with a third annular groove (1012); the third annular groove (1012) is provided with a third drainage hole (1013); and the supporting frame (104) is provided with a rotation stopping structure (1045), which is configured to match with the third drainage hole (1013) to limit a rotation angle of the base ring (101).

6. The bearing according to claim 5, **characterized in that**, there are two rotation stopping structures (1045), which are spaced and arranged on the supporting frame (104).

7. The bearing according to claim 6, **characterized in that**, a crossed-ribs grid structure (1046) is provided on the supporting frame (104), and disposed within an arcuate range between the two rotation stopping structures (1045).

8. The bearing according to claim 1 or 2, **characterized in that**, the upper rotating frame (102) is provided with a latch structure (1021), which is configured to limit a position of a head rotating drum (201) mounted on the upper rotating frame (102).

9. The bearing according to claim 1 or 2, **characterized in that**, the moving assembly is a rolling assembly;
the rolling assembly includes a retainer (105) and balls arranged in clamping holes of the retainer (105).

10. The bearing according to claim 1 or 2, **characterized in that**, an annular cavity (106), which has an opening at one end thereof, is formed between the base ring (101), the lower rotating frame (103) and the supporting frame (104); and the opening of the annular cavity (106) is disposed between the shielding edge (1041) and the shielding ring (1011).

11. The bearing according to claim 1 or 2, **characterized in that**, a connection between the shielding edge (1041) and a main body of the supporting frame (104) is a curved transition;
a height of the shielding ring (1011) is greater than a height of the shielding edge (1041).

12. An air conditioner, comprising a head assembly (200) and an air duct component, **characterized in that**, the head assembly (200) includes a head rotating drum (201), which is provided with an air outlet (204); the head rotating drum (201) is connected to the air duct component through the bearing (100) defined in any one of claims 1-11; and the head rotating drum (201) is fixed on the upper rotating frame (102).

## Patentansprüche

1. Lager, umfassend:
einen Basisring (101), dessen Innenwand sich in einer axialen Richtung erstreckt, um einen Abschirmring (1011) auszubilden;
einen oberen Drehrahmen (102), der ringförmig und auf dem Abschirmring (1011) ummantelt ist;
einen unteren Drehrahmen (103), der ringförmig ist, auf dem Abschirmring (1011) ummantelt und unter dem oberen Drehrahmen (102) angeordnet ist;
eine bewegliche Baugruppe, die zwischen dem oberen Drehrahmen (102) und dem unteren Drehrahmen (103) angeordnet ist; und
einen Tragrahmen (104);
wobei der Tragrahmen (104) ringförmig ist; und eine Innenwand des Tragrahmens (104) erstreckt sich in einer axialen Richtung, um eine Abschirmkante (1041) auszubilden; der Basisring (101) ist auf der Abschirmkante (1041) ummantelt; **dadurch gekennzeichnet, dass**
der Tragrahmen (104) mit einer ersten Ringnut (1042) versehen ist,
und die erste Ringnut (1042) mit einem ersten Drainageloch (1043) versehen ist.

2. Lager nach Anspruch 1, **dadurch gekennzeichnet, dass** ein Winkel zwischen einer inneren Bodenfläche der ersten Ringnut (1042) und einer horizontalen Ebene von 2° bis 5° beträgt.

3. Lager nach Anspruch 1 oder 2, **dadurch gekennzeichnet, dass** der untere Drehrahmen (103) mit einer zweiten Ringnut (1031) versehen ist; und die zweite Ringnut (1031) ist mit einem zweiten Drainageloch (1032) versehen.

4. Lager nach Anspruch 1 oder 2, **dadurch gekennzeichnet, dass** der Basisring (101) mit einer dritten Ringnut (1012) versehen ist; und die dritte Ringnut (1012) ist mit einem dritten Drainageloch (1013) versehen.

5. Lager nach Anspruch 1 oder 2, **dadurch gekennzeichnet, dass** der Basisring (101) mit einer dritten Ringnut (1012) versehen ist; die dritte Ringnut (1012) ist mit einem dritten Drainageloch (1013) versehen; und der Tragrahmen (104) ist mit einer Drehungsstoppstruktur (1045) versehen, die so konfiguriert ist, dass sie mit dem dritten Drainageloch (1013) übereinstimmt, um einen Drehwinkel des Basisrings (101) zu begrenzen.

6. Lager nach Anspruch 5, **dadurch gekennzeichnet, dass** es zwei Drehungsstoppstrukturen (1045) gibt, die beabstandet und auf dem Tragrahmen (104) angeordnet sind.

7. Lager nach Anspruch 6, **dadurch gekennzeichnet, dass** eine Gitterstruktur mit gekreuzten Rippen (1046) am Tragrahmen (104) vorgesehen ist und in einer bogenförmigen Erstreckung zwischen den beiden Drehungsstoppstrukturen (1045) angeordnet ist.

8. Lager nach Anspruch 1 oder 2, **dadurch gekennzeichnet, dass** der obere Drehrahmen (102) mit einer Verriegelungsstruktur (1021) versehen ist, die konfiguriert ist, um eine Position einer auf dem oberen Drehrahmen (102) montierten Kopfdrehtrommel (201) zu begrenzen.

9. Lager nach Anspruch 1 oder 2, **dadurch gekennzeichnet, dass** die bewegliche Baugruppe eine rollende Baugruppe ist;
die rollende Baugruppe umfasst einen Halter (105) und Kugeln, die in Klemmlöchern des Halters (105) angeordnet sind.

10. Lager nach Anspruch 1 oder 2, **dadurch gekennzeichnet, dass** ein ringförmiger Hohlraum (106), der an dessen Ende eine Öffnung aufweist, zwischen dem Basisring (101), dem unteren Drehrahmen (103) und dem Tragrahmen (104) ausgebildet ist; und die Öffnung des ringförmigen Hohlraums (106) ist zwischen der Abschirmkante (1041) und dem Abschirmring (1011) angeordnet.

11. Lager nach Anspruch 1 oder 2, **dadurch gekennzeichnet, dass** eine Verbindung zwischen der Abschirmkante (1041) und einem Hauptkörper des Tragrahmens (104) ein gekrümmter Übergang ist;
eine Höhe des Abschirmrings (1011) ist größer als eine Höhe der Abschirmkante (1041).

12. Klimaanlage, umfassend eine Kopfbaugruppe (200) und eine Luftkanalkomponente, **dadurch gekennzeichnet, dass** die Kopfbaugruppe (200) eine Kopfdrehtrommel (201) enthält, die mit einem Luftauslass (204) versehen ist; die Kopfdrehtrommel (201) ist mit der Luftkanalkomponente durch das Lager (100) verbunden, das in einem der Ansprüche 1-11 definiert ist; und die Kopfdrehtrommel (201) ist am oberen Drehrahmen (102) befestigt.

## Revendications

1. Palier comprenant :
un anneau de base (101), dont une paroi intérieure se prolonge dans une direction axiale pour former une bague de blindage (1011) ;
un cadre rotatif (102) supérieur, étant annulaire et chemisé sur la bague de blindage (1011) ;
un cadre rotatif (103) inférieur, étant annulaire, chemisé sur la bague de blindage (1011), et disposé sous le cadre rotatif (102) supérieur ;
un assemblage mobile étant disposé entre le cadre rotatif (102) supérieur et le cadre rotatif (103) inférieur ; et un cadre de support (104) ;
dans lequel, le cadre de support (104) est annulaire ;
et une paroi intérieure du cadre de support (104) se prolonge dans une direction axiale pour former un bord de blindage (1041) ; l'anneau de base (101) est chemisé sur le bord de blindage (1041) ; **caractérisé en ce que** le cadre de support (104) est pourvu d'une première rainure annulaire (1042),
et la première rainure annulaire (1042) est pourvue d'un premier orifice de drainage (1043).

2. Palier selon la revendication 1, **caractérisé en ce qu'**un angle entre une surface de fond intérieure de la première rainure annulaire (1042) et un plan horizontal est compris entre 2 et 5°.

3. Palier selon la revendication 1 ou 2, **caractérisé en ce que** le cadre rotatif (103) inférieur est pourvu d'une deuxième rainure annulaire (1031) ; et la deuxième rainure annulaire (1031) est pourvue d'un deuxième orifice de drainage (1032).

4. Palier selon la revendication 1 ou 2, **caractérisé en ce que** l'anneau de base (101) est pourvu d'une troisième rainure annulaire (1012) ; et la troisième rainure annulaire (1012) est pourvue d'un troisième orifice de drainage (1013).

5. Palier selon la revendication 1 ou 2, **caractérisé en ce que** l'anneau de base (101) est pourvu d'une troisième rainure annulaire (1012) ; la troisième rainure annulaire (1012) est pourvue d'un troisième orifice de drainage (1013) ; et le cadre de support (104) est pourvu d'une structure d'arrêt (1045) de rotation étant configurée pour correspondre au troisième orifice de drainage (1013) pour limiter un angle de rotation de l'anneau de base (101).

6. Palier selon la revendication 5, **caractérisé en ce qu'**il y a deux structures d'arrêt (1045) de rotation étant espacées et disposées sur le cadre de support (104).

7. Palier selon la revendication 6, **caractérisé en ce qu'**une structure en grille (1046) à nervures croisées est prévue sur le cadre de support (104), et disposée à l'intérieur d'une étendue arquée entre les deux structures d'arrêt (1045) de rotation.

8. Palier selon la revendication 1 ou 2, **caractérisé en ce que** le cadre rotatif (102) supérieur est pourvu d'une structure de verrouillage (1021) étant configurée pour limiter une position d'un tambour de tête rotatif (201) monté sur le cadre rotatif (102) supérieur.

9. Palier selon la revendication 1 ou 2, **caractérisé en ce que** l'assemblage mobile est un assemblage roulant ;
l'assemblage roulant inclut un élément de retenue (105) et des billes disposées dans des orifices de fixation de l'élément de retenue (105).

10. Palier selon la revendication 1 ou 2, **caractérisé en ce qu'**une cavité annulaire (106), comportant une ouverture à une extrémité de celle-ci, est formée entre l'anneau de base (101), le cadre rotatif (103) inférieur et le cadre de support (104) ; et l'ouverture de la cavité annulaire (106) est disposée entre le bord de blindage (1041) et la bague de blindage (1011).

11. Palier selon la revendication 1 ou 2, **caractérisé en ce qu'**un raccordement entre le bord de blindage (1041) et un corps principal du cadre de support (104) est une transition incurvée ;
une hauteur de la bague de blindage (1011) est supérieure à une hauteur du bord de blindage (1041).

12. Conditionneur d'air, comprenant un assemblage de tête (200) et un composant de conduit d'air, **caractérisé en ce que** l'assemblage de tête (200) inclut un tambour de tête rotatif (201), étant pourvu d'une sortie d'air (204) ; le tambour de tête rotatif (201) est raccordé au composant de conduit d'air à travers le palier (100) défini dans l'une quelconque des revendications 1-11 ;
et le tambour de tête rotatif (201) est fixé sur le cadre rotatif (102) supérieur.
